# EUROPÄISCHE PATENTSCHRIFT

(11) **EP 3 804 095 B1**
(45) Veröffentlichungstag und Bekanntmachung des Hinweises auf die Patenterteilung: **18.10.2023**
(21) Anmeldenummer: 19726947.5
(22) Anmeldetag: 22.05.2019
(51) Int. Cl.: H02K 1/32, H02K 9/06

(54) **ROTOR FÜR EINE ELEKTRISCHE MASCHINE, INSBESONDERE EINES KRAFTFAHRZEUGS, SOWIE ELEKTRISCHE MASCHINE, INSBESONDERE FÜR EIN KRAFTFAHRZEUG**
ROTOR FOR AN ELECTRICAL MACHINE, IN PARTICULAR BELONGING TO A MOTOR VEHICLE, AND ELECTRICAL MACHINE, IN PARTICULAR FOR A MOTOR VEHICLE
ROTOR POUR UNE MACHINE ÉLECTRIQUE, EN PARTICULIER D'UN VÉHICULE AUTOMOBILE, AINSI QUE MACHINE ÉLECTRIQUE, EN PARTICULIER POUR UN VÉHICULE AUTOMOBILE

(30) Priorität: 30.05.2018 DE 102018208620
(43) Veröffentlichungstag der Anmeldung: 14.04.2021
(73) Patentinhaber: Vitesco Technologies Germany GmbH, 93055 Regensburg (DE)
(72) Erfinder: WIETHOFF, Swen, 81737 München (DE); ELTNER, Frank, 81737 München (DE); ROSSMANN, Andy, 81737 München (DE); HOFFMANN, Robert, 81737 München (DE)
(74) Vertreter: Vitesco Technologies
(86) Internationale Anmeldenummer: PCT/EP2019/063224
(87) Internationale Veröffentlichungsnummer: WO 2019/228886

(56) Entgegenhaltungen:
- EP-A1- 3 251 880
- DE-A1- 4 443 427
- DE-A1-102009 001 458
- DE-A1-102014 204 390
- DE-U1- 9 314 985

## Beschreibung

Die Erfindung betrifft einen Rotor für eine elektrische Maschine, insbesondere eines Kraftfahrzeugs, gemäß dem Oberbegriff von Patentanspruch 1. Ferner betrifft die Erfindung eine elektrische Maschine, insbesondere für ein Kraftfahrzeug, gemäß dem Oberbegriff von Patentanspruch 9.

Derartige Rotoren für elektrische Maschinen, insbesondere von Kraftfahrzeugen, sowie derartige elektrische Maschinen, insbesondere für Kraftfahrzeuge, sind aus dem allgemeinen Stand der Technik bereits hinlänglich bekannt. Die jeweilige elektrische Maschine weist einen jeweiligen Stator und den jeweiligen Rotor auf, welcher um eine Drehachse relativ zu dem Stator drehbar ist. Beispielsweise kann der Rotor von dem Stator angetrieben werden, sodass die elektrische Maschine beispielsweise über den Rotor Drehmomente, insbesondere zum Antreiben des jeweiligen Kraftfahrzeugs, bereitstellen kann. Der Rotor weist dabei wenigstens eine um die Drehachse, insbesondere relativ zu dem Stator, drehbare Rotorwelle und wenigstens ein Blechpaket auf, welches drehfest mit der Rotorwelle verbunden ist. Außerdem weist der jeweilige Rotor wenigstens ein Lüfterrad auf, welches mehrere Lüfterradschaufeln umfasst.

Das Lüfterrad ist drehfest mit der Rotorwelle verbunden, sodass sich das Lüfterrad mit der Rotorwelle und mit dem Blechpaket um die Drehachse mitdreht. Durch Drehen des Lüfterrads um die Drehachse ist beziehungsweise wird mittels der Lüfterradschaufeln und somit mittels des Lüfterrads Luft zu fördern beziehungsweise gefördert, mittels welcher zumindest der Rotor zumindest in einem Teilbereich gekühlt werden kann. Mit anderen Worten, werden die Rotorwelle und somit das Lüfterrad um die Drehachse, insbesondere relativ zu dem Stator, gedreht, so wird mittels der Lüfterradschaufeln und somit mittels des Lüfterrads Luft gefördert, mittels welcher zumindest der Rotor sowie vorzugsweise auch der Stator gekühlt werden können beziehungsweise gekühlt werden.

Die DE 44 43 427 A1 beschreibt eine elektrische Maschine mit einem Rotor, der als Kurzschlussläufer ausgebildet ist. An einen Kurzschlussring des Kurzschlussläufers sind Lüfterflügel angeformt. Beabstandet zu den Lüfterflügeln, oder angrenzend an die Lüfterflügel ist eine geschlossene Scheibe auf der Rotorwelle angeordnet.

In der EP 3 251 880 A1 ist eine elektrische Maschine gezeigt, wobei der Rotor Stirnseitig Lüfterräder aufweist, die eine Mehrzahl von Lüfterradschaufeln haben, die in Umfangsrichtung in unterschiedlichen Abständen zueinander angeordnet und oder ausgebildet sind.

Aus der DE 93 14 985 U1 ist eine Läufer für eine elektrische Maschine bekannt, wobei der Rotor als Klauenpolrotor ausgebildet ist, und eine Lüfterscheibe mit einer Stirnfläche des Läufers verklebt ist.

Eine Aufgabe der vorliegenden Erfindung ist es, einen Rotor und eine elektrische Maschine der eingangs genannten Art derart weiterzuentwickeln, dass eine besonders effektive Kühlung realisierbar ist.

Diese Aufgabe wird erfindungsgemäß durch einen Rotor mit den Merkmalen des Patentanspruchs 1 sowie durch eine elektrische Maschine mit den Merkmalen des Patenanspruchs 9 gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Rotor für eine elektrische Maschine, insbesondere eines Kraftfahrzeugs. Der Rotor weist wenigstens eine um eine Drehachse drehbare Rotorwelle und wenigstens ein drehfest mit der Rotorwelle verbundenes Blechpaket auf, welches somit mit der Rotorwelle um die Drehachse, insbesondere relativ zu einem Gehäuse beziehungsweise relativ zu einem Stator der elektrische Maschine, mitdrehbar ist. Beispielsweise kann der Rotor von dem Stator angetrieben und dadurch um die Drehachse relativ zu dem Rotor beziehungsweise relativ zu dem Gehäuse gedreht werden. Der Rotor weist darüber hinaus wenigstens ein Lüfterrad auf, welches, insbesondere zumindest mittelbar, drehfest mit der einfach auch als Welle bezeichneten Rotorwelle und somit mit dem Blechpaket verbunden ist. Somit ist das Lüfterrad mit der Rotorwelle und mit dem Blechpaket um die Drehachse, insbesondere relativ zu dem Stator beziehungsweise relativ zu dem Gehäuse, mitdrehbar. Das Lüfterrad weist mehrere Lüfterradschaufeln auf, wobei mittels der Lüfterradschaufeln und somit mittels des Lüfterrads Luft zum Kühlen zumindest eines Teils des Rotors sowie vorzugsweise auch des Stators zu fördern ist.

Mit anderen Worten, werden die Rotorwelle und somit das Blechpaket und das Lüfterrad um die Drehachse gedreht, so wird mittels der Lüfterradschaufeln und somit mittels des Lüfterrads Luft gefördert, mittels welcher zumindest der Rotor und vorzugsweise auch der Stator gekühlt werden können beziehungsweise gekühlt werden. Das auch als Laufrad bezeichnete Lüfterrad kann dabei vorzugsweise als ein Radiallüfterrad ausgebildet sein, welches während eines Betriebs des Rotors beziehungsweise der elektrische Maschine in axialer Richtung des Rotors von der mittels des Lüfterrads geförderten Luft angeströmt und in radialer Richtung von der Luft abgeströmt wird. Während des Betriebs werden die Rotorwelle und somit das Lüfterrad um die Drehachse gedreht beziehungsweise während des Betriebs drehen sich die Rotorwelle und das Lüfterrad um die Drehachse, sodass das Lüfterrad Luft fördert. Während des Betriebs strömt die mittels des Lüfterrads geförderte Luft des Lüfterrads an sich in axialer Richtung des Rotors an und in radialer Richtung des Rotors ab. Dabei fällt die axiale Richtung des Rotors mit der Drehachse, mit der axialen Richtung der Rotorwelle und mit der axialen Richtung des Lüfterrads zusammen, und die radiale Richtung des Rotors verläuft senkrecht zur Drehachse und somit senkrecht zur axialen Richtung des Rotors, wobei die radiale Richtung des Rotors mit der radialen Richtung der Rotorwelle und mit der radialen Richtung des Lüfterrads zusammenfällt.

Um nun auf besonders einfache und insbesondere kosten- und bauraumgünstige Weise eine besonders effektive und effiziente Kühlung zumindest des Rotors und vorzugsweise des Stators realisieren zu können, ist es erfindungsgemäß vorgesehen, dass die Lüfterradschaufeln an einer den Lüfterradschaufeln in axialer Richtung des Rotors zugewandten Stirnseite des Blechpakets direkt anliegen. Somit berühren zumindest jeweilige Teile der jeweiligen Lüfterradschaufeln die den Lüfterradschaufeln beziehungsweise den Teilen in axialer Richtung des Rotors zugewandte Stirnseite des Blechpakets direkt beziehungsweise unmittelbar, sodass die Lüfterradschaufeln beziehungsweise die Teile in axialer Richtung des Rotors unmittelbar beziehungsweise direkt an der Stirnseite des Blechpakets abgestützt sind.

Insbesondere kann vorgesehen sein, dass zumindest jeweilige Teile von jeweiligen, in axialer Richtung der Stirnseite des Blechpakets zugewandten zweiten Stirnseiten der jeweiligen Lüfterradschaufeln direkt beziehungsweise unmittelbar an der Stirnseite des Blechpakets anliegen. Hierdurch können beispielsweise unerwünschte und übermäßige Leckage- beziehungsweise Bypassströmungen der geförderten Luft beziehungsweise von Teilen der Luft zwischen dem Lüfterrad und dem Blechpaket hindurch vermieden werden, sodass zumindest der Rotor effektiv und effizient gekühlt werden kann.

Des Weiteren ist es erfindungsgemäß vorgesehen, dass das Lüfterrad in, insbesondere streng, axialer Richtung für die Luft dicht ist. Dies bedeutet, dass das Lüfterrad in streng axialer Richtung des Rotors beziehungsweise genau entlang einer mit der axialen Richtung des Rotors zusammenfallenden oder parallel zur axialen Richtung des Rotors verlaufenden Richtung nicht von Luft und somit nicht von der mittels des Lüfterrads geförderten Luft durchströmt werden kann, sodass das Lüfterrad genau in axialer Richtung des Rotors für die mittels des Lüfterrads geförderte Luft dicht ist. Die während des Betriebs des Rotors mittels des Lüfterrads geförderte und somit das Lüfterrad, insbesondere in axialer Richtung, anströmende und von dem Lüfterrad, insbesondere in radialer Richtung, abströmende Luft kann somit beispielsweise in radialer Richtung des Rotors und somit des Lüfterrads und/oder schräg dazu durch das Lüfterrad und dabei beispielsweise zwischen den Lüfterradschaufeln hindurchströmen, jedoch kann die Luft nicht streng in axialer Richtung durch das Lüfterrad hindurchströmen. Hierdurch können unerwünschte Luftströmungen vermieden werden.

Insbesondere kann dadurch eine unerwünschte Luftzirkulation vermieden werden, sodass beispielsweise während des Betriebs vermieden werden kann, dass das Lüfterrad Luft, die bereits zuvor zum Kühlen des Rotors verwendet und dadurch erwärmt wurde, wieder ansaugt, sodass eine effiziente und effektive Kühlung sichergestellt werden kann. Der erfindungsgemäße Rotor ermöglicht somit eine auch als Entwärmung bezeichnete Kühlung des Rotors und vorzugsweise auch des Stators durch eine, insbesondere reine, Luftkühlung ohne einen zusätzlichen fremdbetriebenen Lüfter. Unter einem zusätzlichen fremdbetriebenen Lüfter ist ein solcher Lüfter zu verstehen, dessen Fremdlüfterrad von einer von dem Rotor unterschiedlichen, zusätzlich zu dem Rotor vorgesehenen Einrichtung antreibbar ist beziehungsweise angetrieben wird. Ferner ist es möglich, bei Verwendung einer reinen Luftkühlung des erfindungsgemäßen Rotors beziehungsweise der gesamten elektrischen Maschine auch deren Inverter mittels der Luft mitzukühlen, welche mittels des Lüfterrads gefördert wird.

Der Erfindung liegt dabei insbesondere die folgende Erkenntnis zugrunde: Herkömmliche Lüfterräder sind entlang der axialen Richtung üblicherweise von Luft durchströmbar. Da es ferner zu einer Relativbewegung, insbesondere zu einer Relativdrehung, zwischen dem Lüfterrad und dem Gehäuse der elektrischen Maschine kommt, ist ein sich zumindest in axialer Richtung erstreckender Abstand zwischen dem Lüfterrad und dem Gehäuse vorgesehen, woraus ein in axialer Richtung zwischen dem Gehäuse und dem Lüfterrad angeordneter Luftspalt resultiert. Dieser Abstand beziehungsweise dieser Luftspalt wird vorgesehen, da es ansonsten zu einer Kollision zwischen dem Lüfterrad und dem Gehäuse und somit zu einer Beschädigung oder Zerstörung des Lüfterrads und/oder des Gehäuses kommen kann. Der bei herkömmlichen Lösungen vorgesehene und technisch erforderliche Luftspalt zwischen dem Lüfterrad und dem Gehäuse kann während des Betriebs eine Bypass- beziehungsweise Leckageströmung erzeugen. Dadurch kann bereits ausgestoßene Luft, welche zuvor bereits mittels des Lüfterrads angesaugt, zur Kühlung verwendet und dadurch erwärmt wurde, wieder mittels des Lüfterrads angesaugt werden. Dadurch kann der Wirkungsgrad des Lüfterrads verschlechtert werden. Die zuvor genannten Probleme und Nachteile können mittels des erfindungsgemäßen Rotors vermieden werden.

Üblicherweise ist es vorgesehen, dass während des Betriebs der elektrischen Maschine beziehungsweise des Rotors die Luft mittels de Lüfterrads axial aus einer Umgebung der elektrischen Maschine beziehungsweise des Gehäuses in die elektrische Maschine beziehungsweise in das Gehäuse gesaugt wird, insbesondere durch wenigstens eine oder mehrere stirnseitigen Öffnungen in dem Gehäuse, in welchem der Rotor und der Stator angeordnet sind. Die Luft wird beispielsweise durch wenigstens eine oder mehrere stirnseitige, auf einer ersten Seite des Gehäuses angeordnete Öffnungen in axialer Richtung hindurch in das Gehäuse gesaugt und/oder die Luft wird durch wenigstens ein oder mehrere stirnseitige, auf einer der ersten Seite in axialer Richtung des Rotors abgewandten zweiten Seite angeordnete Öffnungen hindurch in das Gehäuse gesaugt. Die mittels des Lüfterrads angesaugte und somit geförderte Luft strömt das Lüfterrad beispielsweise zumindest im Wesentlichen in axialer Richtung an und strömt das Lüfterrad zumindest im Wesentlichen in radialer Richtung ab. Mit anderen Worten wird die mittels des Lüfterrads geförderte Luft in axialer Richtung zu dem Lüfterrad hingefördert und in radialer Richtung von dem Lüfterrad weggefördert. Ferner ist es denkbar, dass die Luft durch seitliche Öffnungen an einem Umfang des Gehäuses hindurchgefördert und dadurch aus dem Gehäuse ausgeblasen wird.

Vorzugsweise ist das Lüfterrad als rückwärts gekrümmtes Lüfterrad ausgebildet. Mit anderen Worten ist es vorzugsweise vorgesehen, dass die Lüfterradschaufeln rückwärts gekrümmt sind. Darunter ist insbesondere folgendes zu verstehen: Während des Betriebs dreht sich das Lüfterrad in eine Drehrichtung um die Drehachse, wobei die Lüfterradschaufeln entgegen der Drehrichtung und somit rückwärts gekrümmt sind.

Außer der mittels des Lüfterrads geförderten Luft resultiert ein Luftstrom, mittels welchem beispielsweise ein Wickelkopf des Stators direkt und dabei beispielsweise durch Konvektion gekühlt werden kann, da der Luftstrom den Wickelkopf direkt an- und umströmt. Weist beispielsweise der Rotor keine Rotorinnenkühlung auf, so wird der üblicherweise wärmeempfindliche Magnete, insbesondere Permanentmagnete, aufweisende Rotor nur durch Wärmeleitung mit einem großen Abstand zu einer Temperatursenke gekühlt. Vorzugsweise ist jedoch eine Rotorinnenkühlung vorgesehen, sodass der Rotor, insbesondere das Blechpaket, von der mittels des Lüfterrads geförderten Luft durchströmbar ist. Dadurch kann eine effektive und effiziente Kühlung gewährleistet werden.

Das Blechpaket weist vorzugsweise Taschen auf, welche auch als Magnettaschen bezeichnet werden. Dabei sind die zuvor genannten und vorzugsweise als Permanentmagnete ausgebildeten Magnete jeweils zumindest teilweise, insbesondere zumindest überwiegend oder vollständig, in den jeweiligen Taschen angeordnet. Insbesondere sind die Magnete an dem Blechpaket befestigt.

Um eine effiziente Kühlung zu gewährleisten, sollte das vorzugsweise als Radiallüfterrad ausgebildete und somit vorzugsweise ein Radialgebläse bildende Lüfterrad innen ansaugen, und ein Konturspalt an der jeweiligen Stirnseite der jeweiligen, einfach auch als Schaufel bezeichneten Lüfterradschaufel sollte möglichst klein sein, um unerwünschte Luftspalte und daraus resultierende Leckageströmungen besonders gering halten zu können. Ferner sollten Toträume beziehungsweise Leckagen vermieden werden. Üblicherweise muss die Luftströmung durch wenigstens eine oder mehrere Wicklungen, insbesondere des Stators, gezogen, das heißt gesaugt werden. Dies bedeutet, dass eine Kontur des Gehäuses möglichst nahe an jeweiligen Stirnseiten von jeweiligen Wicklungsenden und auch an den jeweiligen Stirnseiten der Schaufeln angeordnet sein sollte. Dies kann bei dem erfindungsgemäßen Rotor beziehungsweise mittels des erfindungsgemäßen Rotors realisiert werden.

Als besonders vorteilhaft hat es sich gezeigt, wenn das gesamte beziehungsweise vollständige Lüfterrad für die Luft vollständig dicht ist. Dies bedeutet, dass das Lüfterrad entlang seiner vollständigen radialen Erstreckung und über seine gesamte, in um die Drehachse verlaufender Umfangsrichtung beziehungsweise Drehrichtung verlaufender Erstreckung für die Luft dicht ist. Hierdurch können unerwünschte Bypässe beziehungsweise Leckageströmungen vermieden werden.

Erfindungsgemäß ist vorgesehen, dass das Lüfterrad eine sich in axialer Richtung der Rotorwelle und somit des Rotors und des Lüfterrads an die Lüfterradschaufeln anschließende und in axialer Richtung für die Luft dichte Deckscheibe aufweist, welche beispielsweise einstückig mit den Lüfterradschaufeln ausgebildet sein kann. Die Lüfterradschaufeln sind beispielsweise mit der Deckscheibe verbunden und/oder über die Deckscheibe miteinander verbunden. Die Deckscheibe ist zumindest in einem in radialer Richtung innenseitig der Lüfterradschaufeln und beispielsweise in radialer Richtung außenseitig der Rotorwelle angeordneten Bereich in axialer Richtung von der Stirnseite beabstandet, wodurch in dem Bereich ein in axialer Richtung durch die Deckscheibe begrenzter Zwischenraum gebildet ist. Insbesondere ist der Zwischenraum in eine mit der axialen Richtung des Rotors zusammenfallende und von der Stirnseite des Blechpakets wegweisende Richtung durch die Deckscheibe, insbesondere durch eine Wandung der Deckscheibe, begrenzt.

In radialer Richtung nach innen hin ist beispielsweise der Zwischenraum durch die Rotorwelle und/oder durch eine weitere Wandung der Deckscheibe begrenzt beziehungsweise gebildet. In den Zwischenraum ist die mittels des Lüfterrads geförderte Luft in axialer Richtung einleitbar. Mit anderen Worten, während des Betriebs strömt die mittels des Lüfterrads geförderte Luft in, insbesondere streng, axialer Richtung in den Zwischenraum ein. Dabei ist die Luft mittels der Deckscheibe, insbesondere mittels der Wandung, von dem Zwischenraum in radialer Richtung nach außen zu den Lüfterradschaufeln zu führen. Dies bedeutet, dass die, insbesondere in axialer Richtung, in den Zwischenraum einströmende Luft mittels der Deckscheibe, insbesondere mittels der Wandung, abgelenkt beziehungsweise umgeleitet und dabei zu den Lüfterradschaufeln hin abgelenkt beziehungsweise umgeleitet wird, sodass eine gezielte und definierte Führung der Luft ohne übermäßige Bypässe und Leckageströmungen darstellbar ist. Dadurch kann eine besonders effiziente und effektive Kühlung gewährleistet werden.

Dabei hat es sich als besonders vorteilhaft gezeigt, wenn die Deckscheibe wenigstens einen Zwischenraum, zumindest teilweise, insbesondere zumindest überwiegend, in axialer Richtung und dabei in die zuvor beschriebene, mit der axialen Richtung zusammenfallende und von der Stirnseite des Blechpakets wegweisende Richtung begrenzenden und bogenförmigen beziehungsweise gewölbten Wandungsbereich aufweist, mittels welchem die Luft von einer axialen Strömungsrichtung, in die die Luft beispielsweise von dem Blechpaket kommend in den Zwischenraum einströmt, in eine radiale Strömungsrichtung hin zu den Lüfterradschaufeln und somit in radialer Richtung nach außen umlenkbar ist beziehungsweise umgelenkt wird. Der Wandungsbereich ist beispielsweise die erste Wandung oder Teil der ersten Wandung. Der Wandungsbereich bildet eine abgerundete beziehungsweise verrundete Fläche und ist konkav beziehungsweise von der Stirnseite des Blechpakets weg gewölbt, sodass eine besonders strömungsgünstige Umlenkung beziehungsweise Umleitung der in den Zwischenraum einströmenden Luft zu den Schaufeln hin realisiert werden kann. Durch den Wandungsbereich können Totgebiete vermieden werden, sodass ein besonders hoher Wirkungsgrad der Kühlung dargestellt werden kann.

Erfindungsgemäß bilden beziehungsweise begrenzen die in Umfangsrichtung des Lüfterrads voneinander beabstandeten Lüfterradschaufeln jeweilige, in Umfangsrichtung des Lüfterrads zwischen den jeweiligen Lüfterradschaufeln angeordnete und von der Luft, insbesondere in radialer Richtung des Rotors, durchströmbare Kanäle. Hierdurch kann die Luft - wie zuvor angedeutet - sozusagen durch das Lüfterrad strömen, jedoch nicht streng in axialer Richtung, sondern in radialer Richtung beziehungsweise nur schräg dazu und dabei durch die Kanäle. Vorzugsweise sind die Kanäle in vollständig hergestellten Zustand der einzige Weg für die mittels des Lüfterrads geförderte Luft durch das Lüfterrad beziehungsweise um dieses herum oder an diesem vorbei.

Erfindungsgemäß ist vorgesehen, dass die Kanäle mittels der Deckscheibe in eine mit der axialen Richtung des Rotors zusammenfallende und von der Stirnseite wegweisende Richtung verschlossen und dadurch für die Luft in axialer Richtung dicht sind. Dies bedeutet, dass die Luft nicht streng in axialer Richtung durch die Kanäle hindurchströmen kann, sondern die Luft kann lediglich in radialer Richtung nach außen durch die Kanäle hindurch strömen, sodass das Lüfterrad für eine streng in axialer Richtung verlaufende Durchströmung von Luft gesichert beziehungsweise geschützt ist. Dadurch kann eine effektive und effiziente Kühlung gewährleistet werden.

Bei einer besonders vorteilhaften Ausführungsform der Erfindung sind die Kanäle in axialer Richtung zu der Stirnseite des Blechpakets hin offen. Da die Schaufeln jedoch unmittelbar beziehungsweise direkt an der Stirnseite des Blechpakets anliegen, können unterwünschte Leckage- beziehungsweise Bypassströmungen vermieden werden. Gleichzeitig können das Gewicht und der Bauraumbedarf des Rotors in einem besonders geringen Rahmen gehalten werden. Außerdem ist eine definierte und präzise Führung der Luft möglich, sodass eine besonders vorteilhafte Kühlung darstellbar ist.

Erfindungsgemäß weist der jeweilige Kanal einen von der mittels des Lüfterrads Luft durchströmbaren Einzelströmungsquerschnitt auf, wobei dadurch, dass mehrere Kanäle vorgesehen sind, mehrere Einzelströmungsquerschnitte vorgesehen sind. Die beziehungsweise alle Einzelströmungsquerschnitte der beziehungsweise aller Kanäle bilden in Summe einen von der Luft durchströmbaren Summenströmungsquerschnitt. Hierdurch können eine besonders vorteilhafte Luftführung und somit eine besonders vorteilhafte Kühlung realisiert werden.

Dabei hat es sich als besonders vorteilhaft gezeigt, wenn das Blechpaket von der mittels des Lüfterrads geförderten Luft durchströmbar ist. Hierdurch ist die zuvor genannte Rotorinnenkühlung realisierbar, sodass der Rotor, insbesondere in seinem Inneren, effektiv und effizient gekühlt werden kann.

Die Deckscheibe ist beispielsweise ein Rücken oder ein Boden des Lüfterrads. Da zum einen die Lüfterradschaufeln direkt an der Stirnseite des Blechpakets, welches auch als Rotorblechpaket bezeichnet wird, anliegen und da zum anderen das Lüfterrad durch die Deckscheibe in streng axialer Richtung dicht für die Luft ist, kann ein Zirkulieren, insbesondere ein axiales Zirkulieren, der Luft zwischen dem Lüfterrad und dem Gehäuse, insbesondere dessen Gehäuseboden, vermieden werden. Dadurch kann ein besonders hoher Wirkungsgrad der Kühlung gewährleistet werden.

Um eine besonders effektive und effiziente Kühlung realisieren zu können, ist erfindungsgemäß vorgesehen, dass das gesamte Blechpaket insgesamt einen von der mittels des Lüfterrads geförderten Luft durchströmbaren Blechpaketströmungsquerschnitt aufweist, welcher dem Summenströmungsquerschnitt entspricht.

Der Blechpaketströmungsquerschnitt ist der gesamte, von der mittels des Lüfterrads geförderten Luft beziehungsweise Luft insgesamt durchströmbare Strömungsquerschnitt des Blechpakets. Der Blechpaketströmungsquerschnitt wird beispielsweise durch genau einen oder aber durch mehrere, in dem Blechpaket verlaufende Luftkanäle gebildet. Der jeweilige Luftkanal weist beispielsweise eine Eintrittsöffnung auf, über welche die mittels des Lüfterrads geförderte Luft in den jeweiligen Luftkanal einströmen kann. Ferner weist der jeweilige Luftkanal eine Austrittsöffnung auf, über welche die den jeweiligen Luftkanal durchströmende Luft aus dem Luftkanal ausströmen und beispielsweise in den zuvor genannten Zwischenraum einströmen kann.

Dabei hat es sich als besonders vorteilhaft gezeigt, wenn beispielsweise wenigstens eine Lüfterradwandung des Lüfterrads unmittelbar an den jeweiligen Luftkanal, insbesondere an dessen Rand oder Randbereiche, insbesondere in radialer Richtung nach außen und/oder innen hin oder in Umfangsrichtung, anschließt, wodurch Strömungsverluste vermieden oder zumindest besonders gering gehalten werden können.

In weiterer Ausgestaltung der Erfindung ist die Deckscheibe entlang ihrer gesamten, von der Rotorwelle in radialer Richtung nach außen verlaufenden Erstreckung und entlang ihrer gesamten, in Umfangsrichtung des Lüfterrads verlaufenden Erstreckung für die Luft dicht, sodass eine gezielte und definierte Führung der Luft gewährleistet werden kann. Unerwünschte Strömungen können somit vermieden werden, sodass ein besonders hoher Wirkungsgrad der Kühlung gewährleistet werden kann.

Um eine besonders vorteilhafte Kühlung zu realisieren, ist es in weiterer Ausgestaltung der Erfindung vorgesehen, dass die Anzahl der Lüfterradschaufeln ungerade ist. Dies bedeutet, dass die Anzahl der Lüfterradschaufeln eine ganze, positive und ungerade Zahl ist. Hierdurch können unerwünschte Geräusche vermieden werden, sodass ein besonders vorteilhaftes Geräuschverhalten des Rotors und somit der elektrische Maschine insgesamt realisiert werden kann.

Die auch als Schaufelradzahl bezeichnete Anzahl der Lüfterradschaufeln hängt beispielsweise von einer Querschnittsfläche der Luftströmung, insbesondere im Blechpaket, ab. Beispielsweise hängt die Anzahl der Lüfterradschaufeln von dem Blechpaketströmungsquerschnitt und/oder von einem jeweiligen, einzelnen und von der Luft durchströmbaren Strömungsquerschnitt des jeweiligen Luftkanals ab. Vorzugsweise wird die Anzahl der Lüfterradschaufeln so gewählt, dass ein Eintrittsquerschnitt der mittels des Lüfterrads geförderten Luft in das Lüfterrad, das heißt beispielsweise ein Eintrittsquerschnitt des Lüfterrads, über dessen Eintrittsquerschnitt die mittels des Lüfterrads geförderte Luft in das Lüfterrad, insbesondere in die jeweiligen Kanäle, einleitbar ist beziehungsweise einströmen kann, einer Querschnittsfläche der Luftströmung im Blechpaket, insbesondere dem Blechpaketströmungsquerschnitt, entspricht.

Um eine besonders effektive und effiziente Kühlung sowie ein besonders vorteilhaftes Geräuschverhalten realisieren zu können, ist es in weiterer Ausgestaltung der Erfindung vorgesehen, dass die Lüfterradschaufeln in einer ungleichmäßigen Winkelteilung angeordnet sind. Dies bedeutet beispielsweise, dass die Lüfterradschaufeln in Umfangsrichtung des Lüfterrads ungleichmäßig verteilt angeordnet sind.

Dabei hat es sich als besonders vorteilhaft gezeigt, wenn die Winkelteilung wenigstens oder genau drei voneinander unterschiedliche Winkel, um welche die jeweiligen Schaufeln beziehungsweise in Umfangsrichtung des Lüfterrads voneinander beabstandet sind, aufweist. Somit dienen beispielsweise die wenigstens oder genau drei voneinander unterschiedlichen Winkel zwischen den Schaufeln der Geräuschminimierung. Die auch als Winkelaufteilung bezeichnete Winkelteilung wird vorzugsweise so ausgestaltet beziehungsweise so angeordnet, dass der Schwerpunkt des Lüfterrads auf der Drehachse liegt.

Schließlich hat es sich als besonders vorteilhaft gezeigt, wenn das Lüfterrad durch einen Rändelpressverband zumindest drehfest mit der Rotorwelle verbunden ist. Vorzugsweise ist das Lüfterrad auch in axialer Richtung der Rotorwelle relativ zu der Rotorwelle gesichert, wobei vorzugsweise das Lüfterrad durch den Rändelpressverband auch in axialer Richtung der Rotorwelle an der Rotorwelle festgelegt ist. Vorzugsweise ist das Lüfterrad auf der Rotorwelle angeordnet. Der Rändelpressverband dient der Reduktion von Fertigungstoleranzen und ermöglicht einen verbesserten Kontakt zur Welle durch Reib- und Formschluss. Ferner kann der Rändelpressverband eine Verminderung des Pressverbands zwischen dem Lüfterrad und der Rotorwelle bei hohen Temperaturen kompensieren, da während des Fügens das weitere Material des Lüfterrads in Zwischenräume der Rändel auf die Welle fließt und so ein zusätzlicher Formschluss entsteht. Ferner ist es denkbar, dass die Rotorwelle und das Lüfterrad einstückig miteinander ausgebildet sind.

Ein zweiter Aspekt der Erfindung betrifft eine elektrische Maschine, insbesondere für ein Kraftfahrzeug. Die elektrische Maschine weist wenigstens einen Stator und wenigstens einen um eine Drehachse relativ zu dem Stator drehbaren Rotor, insbesondere gemäß dem ersten Aspekt der Erfindung, auf. Der Rotor weist wenigstens eine um die Drehachse drehbare Rotorwelle, wenigstens ein drehfest mit der Rotorwelle verbundenes Blechpaket und wenigstens ein drehfest mit der Rotorwelle verbundenes und mehrere Lüfterradschaufeln aufweisendes Lüfterrad auf, mittels welchem Luft zum Kühlen des Rotors sowie vorzugsweise auch des Stators, zu fördern ist. Insbesondere weist die elektrische Maschine auch ein Gehäuse auf, in welchem der Rotor und der Stator jeweils zumindest teilweise, insbesondere zumindest überwiegend oder vollständig, aufgenommen beziehungsweise angeordnet sind.

Um nun eine besonders effiziente und effektive Kühlung gewährleisten zu können, ist es erfindungsgemäß vorgesehen, dass die Lüfterradschaufeln an einer den Lüfterradschaufeln in axialer Richtung des Rotors zugewandten Stirnseite des Blechpakets direkt anliegen, wobei das Lüfterrad in axialer Richtung für die Luft dicht ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ferner gehört zu der Erfindung ein Verfahren zum Betreiben eines erfindungsgemäßen Rotors und/oder einer erfindungsgemäßen elektrische Maschine. Zu der Erfindung gehören auch Weiterbildungen des erfindungsgemäßen Verfahrens und der erfindungsgemäßen elektrische Maschine, die Merkmale aufweisen, wie sie bereits im Zusammenhang mit den Weiterbildungen des erfindungsgemäßen Rotors beschrieben worden sind. Aus diesem Grund sind die entsprechenden Weiterbildungen des erfindungsgemäßen Verfahrens und der erfindungsgemäßen elektrische Maschine hier nicht noch einmal beschrieben.

Die Erfindung umfasst auch die Kombinationen der Merkmale der beschriebenen Ausführungsformen.

Die Erfindung ermöglicht es, die üblicherweise wärmeempfindlichen und beispielsweise als Permanentmagnete ausgebildeten Magnete des Rotors im Vergleich zum Stand der Technik besser zu kühlen, da Wärme an einem Rand von Öffnungen im Inneren des Rotors nahe der auch als Magnettaschen bezeichneten Taschen direkt durch Wärmeströmung beziehungsweise Konvektion abgeführt werden kann. Die Magnete werden dann durch einen stark verkürzten Abstand zur Temperatursenke durch Wärmeleitung gekühlt. Die Temperatursenke ist dabei ein gekühlter Bereich des Blechpakets, dessen gekühlter Bereich insbesondere durch die mittels des Lüfterrads geförderte Luft gekühlt wird. Ferner ist die durch das Lüfterrad verursachte Verlustleistung wesentlich geringer als bei einer rein stirnseitigen Kühlung mittels Radiallufträdern. Dadurch, dass die Lüfterradschaufeln an der Stirnseite des Blechpakets direkt anliegen, kann ein Boden beziehungsweise ein Rücken des Lüfterrads als die zuvor genannte Deckscheibe dienen. Dadurch wird ein radial stirnseitiges Zirkulieren der Luft zwischen dem Lüfterrad und dem Gehäuserad vermieden. Die Kühlung wird so wesentlich effektiver, da unnötige, rotierende und nicht-kühlende Leckage- beziehungsweise Bypassströmungen vermieden werden können.

Die Erfindung ermöglicht die Realisierung einer effektiven Kühlung des Rotors durch Wärmeströmung beziehungsweise Konvektion, insbesondere in einem offenen System, in dem die kühlende Luft beispielsweise radial auf der kühleren Seite der elektrische Maschine angesaugt und anschließend durch möglichst nahe an den Magneten platzierte Öffnungen im Rotor mittels des mitlaufenden Lüfterrads gefördert, insbesondere gesaugt oder gezogen, wird. Die zuvor genannten Öffnungen im Rotor, insbesondere in dessen Inneren, sind beispielsweise Öffnungen im Blechpaket und vorzugsweise die zuvor genannten Luftkanäle in dem Blechpaket. Während des Betriebs weist der Rotor eine warme Seite und die zuvor genannte, gegenüber der warmen Seite kühlere Seite auf, wobei diese von einer insbesondere als Motorumgebung ausgebildeten Umgebung im Kraftfahrzeug abhängig ist.

Das vorzugsweise als Radiallüfterrad ausgebildete Lüfterrad wird dabei an der gegenüber der kühleren Seite wärmeren Seite angeordnet. Mit anderen Worten weist der Rotor während seines Betriebs eine warme Seite und eine demgegenüber kühlere Seite auf. Vorzugsweise ist das Lüfterrad auf der warmen beziehungsweise wärmeren Seite angeordnet, wobei das Lüfterrad während des Betriebs die Luft auf der kühleren Seite ansaugt beziehungsweise in die elektrische Maschine beziehungsweise in das Gehäuse und insbesondere in das Blechpaket beziehungsweise in dessen Luftkanäle einsaugt. Somit strömt die mittels des Lüfterrads geförderte Luft beispielsweise entlang wenigstens eines auch als Luftpfad bezeichneten Strömungspfads durch die elektrische Maschine. In diesem Strömungspfad ist die kühlere Seite stromauf des Blechpakets angeordnet, und die wärmere Seite ist stromab des Blechpakets angeordnet, wobei das Lüfterrad vorzugsweise stromab des Blechpakets und stromab der kühleren Seite und dabei vorzugsweise auf der warmen beziehungsweise wärmeren Seite angeordnet ist. Wie zuvor beschrieben liegen die Lüfterradschaufeln unmittelbar beziehungsweise direkt an der Stirnseite des Blechpakets an. Die Luft wird, insbesondere auf der warmen Seite, durch wenigstens eine oder mehrere, insbesondere seitliche, Öffnungen des Gehäuses mittels des Lüfterrads gefördert und somit aus dem Gehäuse ausgeblasen. In dem Luftpfad ist vorzugsweise wenigstens ein Wickelkopf des Stators beziehungsweise eine Wicklung des Stators angeordnet, sodass sich der Wickelkopf in dem Luftstrom befindet. Der sich in dem Luftstrom befindende Wickelkopf des Stators wird dabei beidseitig durch Konvektion mittels der mittels des Lüfterrads geförderten Luft gekühlt.

Üblicherweise ist ein Inverter der elektrischen Maschine fluidgekühlt. Mittels der Erfindung kann jedoch auch eine reine Luftkühlung des Inverters vorgesehen werden. Mit anderen Worten, bei einer reinen Luftkühlung der gesamten elektrischen Maschine wird auch der Inverter ausschließlich mittels Luft und dabei mittels der mittels des Lüfterrads geförderten Luft gekühlt. Dabei weist der Inverter beispielsweise eine Kühlplatte auf, welche Rippen aufweisen kann, die von der mittels des Lüfterrads geförderten Luft an- und umströmbar sind. Dies bedeutet, dass die mittels des Lüfterrads geförderte Luft die Rippen der Kühlplatte des Inverters an- und umströmen kann, wodurch die Rippen entwärmt werden. Hierdurch wird der Inverter effektiv gekühlt. Beispielsweise ist der Inverter auf einer ersten Seite des Blechpakets angeordnet, während das Lüfterrad auf einer der ersten Seite in axialer Richtung des Rotors gegenüberliegenden zweiten Seite angeordnet ist.

Während des Betriebs des Rotors drehen das Lüfterrad, die Rotorwelle und das Blechpaket mit der gleichen Geschwindigkeit beziehungsweise Drehzahl, sodass kein Luftspalt zwischen dem Lüfterrad und dem Blechpaket sowie zwischen dem Lüfterrad und der Rotorwelle notwendig ist. Hierdurch können durch Leckageströmungen bewirkte Lüfterverluste vermieden werden, sodass ein besonders hoher Wirkungsgrad der Kühlung realisiert werden kann. Das beispielsweise als Radiallüfterrad ausgebildete und somit als Radialgebläse fungierende Lüfterrad kann die Luft beispielsweise im Zentrum des Rotors ansaugen. Vorzugsweise schließen das Lüfterrad und das Blechpaket bündig ab, sodass unerwünschte Bypässe vermieden werden können.

Im Folgenden sind Ausführungsbeispiele der Erfindung beschrieben. Hierzu zeigt:
- Fig. 1: eine schematische und geschnittene Seitenansicht einer erfindungsgemäßen elektrische Maschine gemäß einer ersten Ausführungsform;
- Fig. 2: ausschnittsweise eine schematische und geschnittene Seitenansicht der elektrische Maschine gemäß der ersten Ausführungsform;
- Fig. 3: eine schematische Perspektivansicht der elektrische Maschine gemäß einer zweiten Ausführungsform;
- Fig. 4: eine schematische und geschnittene Seitenansicht der elektrische Maschine gemäß der zweiten Ausführungsform;
- Fig. 5: eine schematische Perspektivansicht eines Rotors der elektrische Maschine gemäß der zweiten Ausführungsform;
- Fig. 6: eine schematische Vorderansicht des Rotors gemäß Fig. 5;
- Fig. 7: eine weitere schematische Vorderansicht des Rotors gemäß Fig. 5 und 6;
- Fig. 8: eine schematische und geschnittene Seitenansicht des Rotors gemäß Fig. 7; und
- Fig. 9: eine schematische und geschnittene Perspektivansicht des Rotors gemäß der zweiten Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

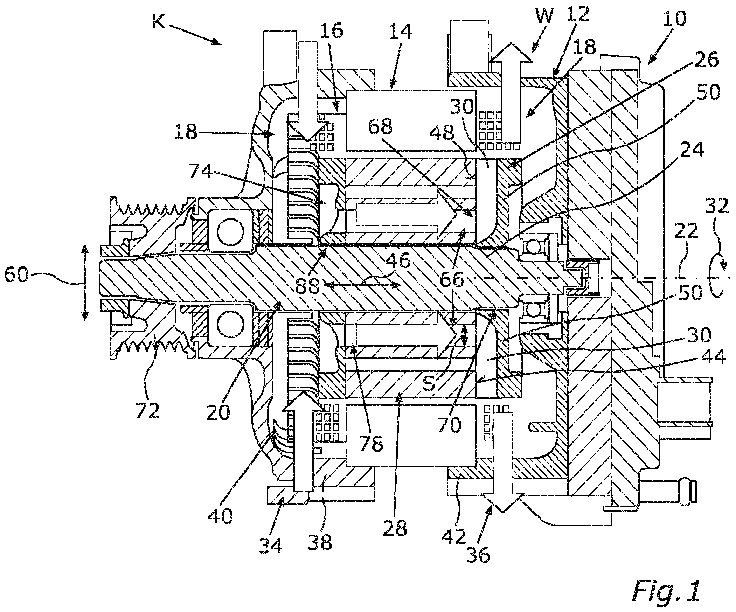

Fig. 1 zeigt in einer schematischen und geschnittenen Seitenansicht eine erste Ausführungsform einer elektrischen Maschine 10, insbesondere für ein Kraftfahrzeug. Die elektrische Maschine 10 weist ein Gehäuse 12 auf, welches mehrere, separat voneinander ausgebildete und miteinander verbundene Gehäuseteile umfassen kann. Außerdem weist die elektrische Maschine 10 wenigstens oder genau einen Stator 14 auf, welcher zumindest teilweise, insbesondere zumindest überwiegend oder vollständig, in dem Gehäuse 12 angeordnet beziehungsweise aufgenommen ist. Der Stator 14 weist wenigstens eine Wicklung 16 auf, welche jeweilige Wickelköpfe 18 aufweisen kann. Die Wickelköpfe 18 sind beispielsweise auf in axialer Richtung der elektrischen Maschine 10 voneinander abgewandten Seiten des Stators 14, insbesondere eines Statorträgers des Stators 14, angeordnet.

Die elektrische Maschine 10 weist darüber hinaus einen zumindest teilweise, insbesondere zumindest überwiegend, in dem Gehäuse 12 angeordneten beziehungsweise aufgenommenen Rotor 20 auf, welcher um eine Drehachse 22 relativ zu dem Stator 14 und relativ zu dem Gehäuse 12 drehbar ist. Dabei ist beispielsweise der Stator 14 bezüglich der Drehachse 22 drehfest an dem Gehäuse 12 festgelegt. Der Rotor 20 ist beispielsweise von dem Stator 14 antreibbar und dadurch um die Drehachse 22 relativ zu dem Stator 14 drehbar. Mit anderen Worten, während eines Betriebs der elektrische Maschine 10 und somit des Rotors 20 wird beispielsweise der Rotor 20 von dem Stator 14 angetrieben und dadurch um die Drehachse 22 relativ zu dem Stator 14 und relativ zu dem Gehäuse 12 bewegt. Dieser Betrieb ist beispielsweise ein Motorbetrieb, in welchem die elektrische Maschine 10 über den Rotor 20 Drehmomente, beispielsweise zum Antreiben eines Kraftfahrzeugs, bereitstellen kann. Beispielsweise während eines als Generatorbetrieb ausgebildeten Betriebs wird der Rotor 20 beispielsweise mittels kinetischer Energie des sich bewegenden Kraftfahrzeugs angetrieben und dadurch um die Drehachse 22 relativ zu dem Stator 14 gedreht. Dann arbeitet die elektrische Maschine 10 beispielsweise als Generator, mittels welchem zumindest ein Teil der kinetischen Energie des Kraftfahrzeugs in elektrische Energie umgewandelt wird, die von dem Generator bereitgestellt wird. In dem Motorbetrieb arbeitet die elektrische Maschine 10 beispielsweise als Elektromotor.

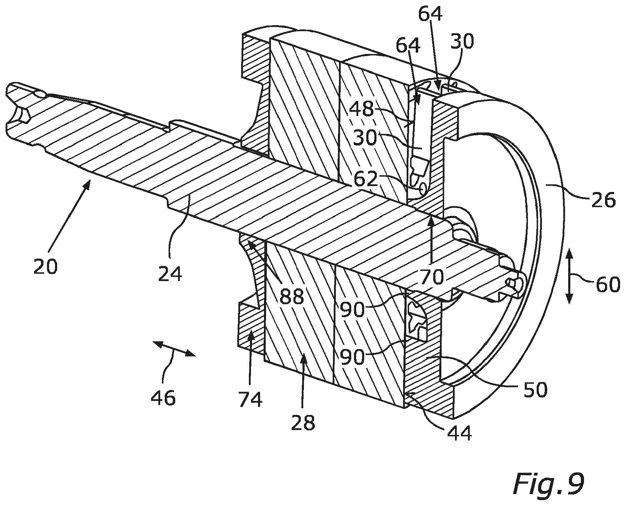

Der Rotor 20 weist wenigstens oder genau eine einfach auch als Welle bezeichnete Rotorwelle 24 auf, welche um die Drehachse 22, welche auch als Motordrehachse bezeichnet wird, relativ zu dem Gehäuse 12 und relativ zu dem Stator 14 drehbar ist beziehungsweise während des Betriebs gedreht wird. Außerdem weist der Rotor 20 wenigstens oder genau ein, insbesondere zumindest mittelbar oder direkt, drehfeste mit der Rotorwelle 24 verbundenes Lüfterrad 26 auf, welches somit mit der Rotorwelle 24 um die Drehachse 22 relativ zu dem Gehäuse 12 und relativ zu dem Stator 14 mitdrehbar ist. Des Weiteren weist der Rotor 20 ein auch als Rotorblechpaket bezeichneten Blechpaket 28 auf, welches, insbesondere zumindest mittelbar oder direkt, drehfeste mit der Rotorwelle 24 verbunden ist. Dadurch ist beispielsweise wird auch das Blechpaket 28 mit der Rotorwelle 24 um die Drehachse 22 relativ zu dem Gehäuse 12 und relativ zu dem Stator 14 mit drehbar beziehungsweise mit gedreht, insbesondere während des zuvor genannten Betriebs. Die Rotorwelle 24, das Lüfterrad 26 und das Blechpaket 28 sind separat voneinander ausgebildete und drehfest miteinander verbundene Komponenten. Dabei sind das Blechpaket 28 und das Lüfterrad 26 auf der Rotorwelle 24 angeordnet und beispielsweise jeweils drehfest mit dieser verbunden. Besonders gut in Zusammenschau mit Fig. 9 ist erkennbar, dass das Lüfterrad 26 mehrere, in um die Drehachse 22 verlaufender Umfangsrichtung des Lüfterrads 26 voneinander beabstandete Lüfterradschaufeln 30 aufweist, welche auch als Schaufeln oder Laufradschaufeln bezeichnet werden. Werden die Rotorwelle 24 und mit dieser das Lüfterrad 26 um die Drehachse 22 in eine beispielsweise in Fig. 1 durch einen Pfeil 32 veranschaulichte Drehrichtung gedreht, so wird mittels der Schaufeln und somit mittels des Lüfterrads 26 Luft gefördert, deren Strömung durch die elektrische Maschine 10 in Fig. 1 durch Pfeile veranschaulicht ist.

Die mittels des Lüfterrads 26 geförderte Luft bildet somit eine Luftströmung, mittels welcher zumindest der Rotor 20 und vorzugsweise auch der Stator 14 jeweils zumindest teilweise gekühlt werden. Bei der ersten Ausführungsform ist eine reine Luftkühlung der elektrischen Maschine 10 vorgesehen, sodass die elektrische Maschine 10 und vorzugsweise auch ihr Inverter ausschließlich mittels der Luft gekühlt werden, die mittels des Lüfterrads 26 gefördert wird. Die in Fig. 1 gezeigten Pfeile veranschaulichen ferner einen auch als Strömungspfad bezeichneten Luftpfad, entlang welchem die mittels des Lüfterrads 26 geförderte Luft durch die elektrische Maschine 10 hindurchströmt. Der Luftpfad weist dabei einen Eintritt 34 auf, über welchen die Luft mittels des Lüfterrads 26 in den Luftpfad und dabei in das Gehäuse 12 eingesaugt wird. Ferner weist der Luftpfad einen Austritt 36 auf, über welchen die Luft mittels des Lüfterrads 26 aus dem Gehäuse 12 beziehungsweise aus der elektrische Maschine 10 herausgefördert wird. Der Luftpfad erstreckt sich somit zumindest oder genau von dem Eintritt 34 hin zu dem Austritt 36.

Während des Betriebs weist die elektrische Maschine 10 eine warme Seite und eine demgegenüber kältere beziehungsweise kühlere Seite auf. Die warme Seite ist in Fig. 1 mit W bezeichnet, und die demgegenüber kältere Seite ist in Fig. 1 mit K bezeichnet.

Aus Fig. 1 ist erkennbar, dass das Lüfterrad 26 auf der warmen Seite W angeordnet ist. Bezogen auf den Luftpfad ist die warme Seite W stromab der kälteren Seite K angeordnet. Außerdem ist das Blechpaket 28 im Luftpfad angeordnet, und auch der Wickelkopf 18 beziehungsweise zumindest einer der Wickelköpfe 18 ist in dem Luftpfad angeordnet. Auch das Lüfterrad 26 ist in dem Luftpfad angeordnet. Aus Fig. 1 ist erkennbar, dass das Lüfterrad 26 stromab des Blechpakets 28 in dem Luftpfad angeordnet ist. Ein erster der Wickelköpfe 18 ist beispielsweise stromab des Eintritts 34 und stromauf des Blechpakets 28 angeordnet, und ein zweiter der Wickelköpfe 18 ist beispielsweise stromauf des Austritts 36 und stromauf des Lüfterrads 26 angeordnet.

Der Eintritt 34 weist wenigstens eine oder mehrere, als Durchgangsöffnungen ausgebildete und auch als Eintrittsöffnungen bezeichnete Öffnungen auf, welche in dem Gehäuse 12 und dabei in einer Wandung 38 des Gehäuses 12 ausgebildet sein, wobei die Wandung 38 einen Aufnahmeraum 40 des Gehäuses 12 in radialer Richtung des Rotors 20 nach außen hin zumindest teilweise, insbesondere zumindest überwiegend oder vollständig, begrenzt. Dabei sind der Stator 14 und der Rotor 20 jeweils zumindest teilweise in dem Aufnahmeraum 40 angeordnet. Die Eintrittsöffnungen sind in radialer Richtung des Rotors 20 von der Luft, die mittels des Lüfterrads 26 gefördert und somit angesaugt wird, durchströmbar, sodass die mittels des Lüfterrads 26 geförderte Luft in radialer Richtung durch die Eintrittsöffnungen hindurchströmt und somit in das Gehäuse 12 einströmt. Dies bedeutet, dass das Lüfterrad 26 die Luft in radialer Richtung des Rotors 20 in das Gehäuse 12 einsaugt. Die mittels des Lüfterrads 26 geförderte Luft strömt während des Betriebs das Lüfterrad 26 per se in axialer Richtung des Rotors 20 und somit in axialer Richtung des Lüfterrads 26 an. Ferner strömt die mittels des Lüfterrads 26 geförderte Luft das Lüfterrad 26 per se während des Betriebs in radialer Richtung ab. Mit anderen Worten ausgedrückt strömt die mittels des Lüfterrads 26 geförderte Luft von dem Lüfterrad an sich in radialer Richtung des Rotors 20 weg beziehungsweise ab. Das Lüfterrad 26 ist somit als Radiallüfterrad ausgebildet, welches ein Radialgebläse bildet. Mittels des Lüfterrads 26 wird beispielsweise die das Lüfterrad 26 in axialer Richtung anströmende und von dem Blechpaket 28 kommende Luft in radialer Richtung nach außen abgelenkt.

Der Austritt 36 weist beispielsweise wenigstens eine oder mehrere, als Durchgangsöffnungen ausgebildete und auch als Austrittsöffnungen bezeichnete Öffnungen auf, über welche das Lüfterrad 26 die durch das Lüfterrad 26 über die Eintrittsöffnung in das Gehäuse 12 eingesaugte Luft aus dem Gehäuse 12 herausfördert und somit ausbläst. Dabei ist die jeweilige Austrittsöffnung in radialer Richtung des Rotors 20 von der mittels des Lüfterrads 26 geförderten Luft durchströmbar. Die jeweilige Austrittsöffnung ist dabei in einer Wandung 42 des Gehäuses 12 ausgebildet, wobei die Wandung 42 den Aufnahmeraum 40 in radialer Richtung nach außen hin zumindest teilweise, insbesondere zumindest überwiegend oder vollständig, begrenzt. Dabei können die Wandungen 38 und 42 einstückig voneinander vollständig, begrenzt. Dabei können die Wandungen 38 und 42 einstückig voneinander ausgebildet sein, oder die Wandungen 38 und 42 sind separat voneinander ausgebildet und miteinander zumindest mittelbar verbunden. Insgesamt ist erkennbar, dass sowohl die Eintrittsöffnungen als auch die Austrittsöffnungen seitliche Öffnungen sind, durch die die mittels des Lüfterrads 26 geförderte Luft in streng radialer Richtung hindurchströmt.

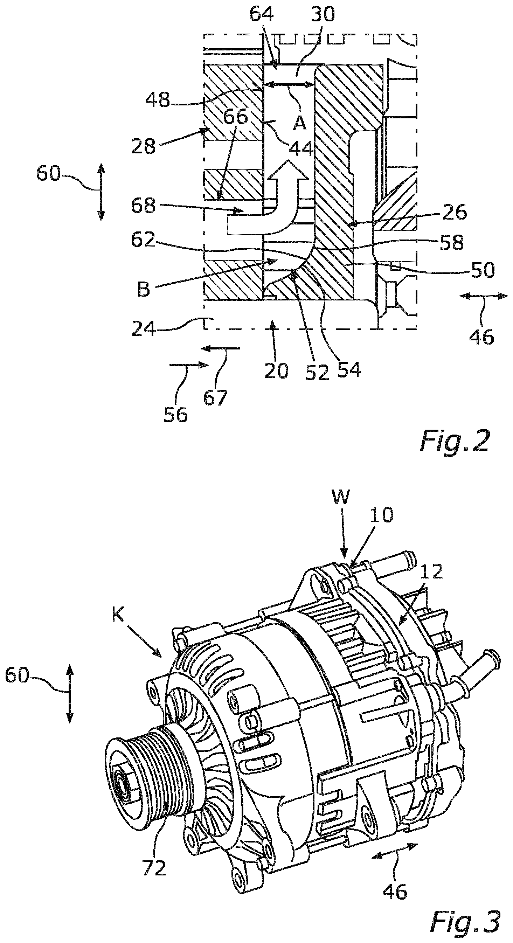

Um nun eine besonders effiziente und effektive Kühlung der elektrische Maschine 10, insbesondere des Rotors 20 sowie gegebenenfalls des Stators 14 realisieren zu können, liegen - wie besonders gut aus Fig. 2 erkennbar ist - die jeweiligen Lüfterradschaufeln 30 an einer den jeweiligen Lüfterradschaufeln 30 in axialer Richtung des Rotors 20 zugewandten Stirnseite 44 direkt beziehungsweise unmittelbar an, sodass die jeweilige Lüfterradschaufel 30 die Stirnseite 44 des Blechpakets 28 unmittelbar beziehungsweise direkt berührt. Die axiale Richtung des Rotors 20 fällt mit der Drehachse 22 zusammen und ist in Fig. 1 durch einen Doppelpfeil 46 veranschaulicht.

Am Beispiel der in Fig. 2 gezeigten Lüfterradschaufel 30 ist erkennbar, dass die jeweilige Lüfterradschaufel 30 eine der Stirnseite 44 des Blechpakets 28 in axialer Richtung des Rotors 20 zugewandte weitere Stirnseite 48 aufweist, wobei beispielsweise die gesamte Stirnseite 48 beziehungsweise zumindest ein Teil der Stirnseite 48 die Stirnseite 44 direkt berührt. Dadurch können unerwünschte Leckage- beziehungsweise Bypassströmungen vermieden werden. Außerdem ist das Lüfterrad 26, insbesondere vollständig, in axialer Richtung des Rotors 20 für die mittels des Lüfterrads 26 geförderte Luft dicht. Dies bedeutet, dass die Luft, welche mittels des Lüfterrads 26 gefördert wird, nicht in streng axialer Richtung des Rotors 20 durch das Lüfterrad 26 hindurchströmen kann, sondern die Luft, welche mittels des Lüfterrads 26 gefördert wird, kann nur durch Kanäle des Lüfterrads 26 hindurchströmen. Diese Kanäle sind dabei in Umfangsrichtung des Lüfterrads 26 zwischen den jeweiligen Lüfterradschaufeln 30 angeordnet und durch diese begrenzt, da die Lüfterradschaufeln 30 in Umfangsrichtung des Lüfterrads 26 voneinander beabstandet sind. Die Umfangsrichtung des Lüfterrads 26 fällt mit der genannten Drehrichtung zusammen, sodass der Pfeil 32 auch die Umfangsrichtung des Lüfterrads 26 veranschaulicht. Außerdem ist aus Fig. 1 erkennbar, dass der auch als Einlass bezeichnete Eintritt 34 auf der kälteren Seite K angeordnet ist, während der auch als Auslass bezeichnete Austritt 36 auf der warmen Seite W angeordnet ist. Die warme Seite W wird auch als wärmere Seite bezeichnet, da die warme Seite W während des Betriebs wärmer als die auch als kalte Seite bezeichnete kältere Seite K ist.

Besonders gut aus Fig. 2 ist erkennbar, dass das Lüfterrad 26 eine sich in axialer Richtung an die Lüfterradschaufeln 30 anschließende und in axialer Richtung vollständig für die Luft dichte Deckscheibe 50 aufweist, welche beispielsweise durch einen Boden oder einen Rücken des Lüfterrads 26 gebildet ist. Die Deckscheibe 50 ist zumindest in einem in radialer Richtung des Rotors 20 innenseitig der Lüfterradschaufeln 30 angeordneten Bereiche B in axialer Richtung von der Stirnseite 44 des Blechpakets 28 beabstandet, wodurch in dem Bereich B ein in axialer Richtung durch die Deckscheibe 50 begrenzter und in radialer Richtung innseitig der Lüfterradschaufeln 30 angeordneter Zwischenraum 52 gebildet ist. In radialer Richtung nach innen hin ist der Zwischenraum 52 beispielsweise durch die Rotorwelle 24 oder vorliegend durch die Deckscheibe 50, insbesondere durch eine Wandung 54 der Deckscheibe 50, begrenzt. In eine mit der axialen Richtung zusammenfallende und in Fig. 2 durch einen Pfeil 56 veranschaulichte und von der Stirnseite 44 wegweisende Richtung ist der Zwischenraum 52 durch die Deckscheibe 50, insbesondere durch eine weitere Wandung 58 der Deckscheibe 50, begrenzt. Die radiale Richtung des Rotors 20 und somit des Lüfterrads 26 ist in Fig. 1 durch einen Doppelpfeil 60 veranschaulicht.

Während des Betriebs strömt die mittels des Lüfterrads 26 geförderte Luft beispielsweise in streng axialer Richtung in den Zwischenraum 52 ein. Daraufhin wird die Luft mittels der Deckscheibe 50, insbesondere mittels der Wandung 54 und/oder mittels der Wandung 58, in radialer Richtung nach außen hin zu den Lüfterradschaufeln 30 umgelenkt beziehungsweise umgeleitet und somit geführt. Dabei weist die Deckscheibe 50 wenigstens einen den Zwischenraum 52 zumindest teilweise in axialer Richtung und dabei in die durch den Pfeil 56 veranschaulichte Richtung begrenzenden und bogenförmigen und vorliegend konkav ausgebildeten Wandungsbereich 62 auf, mittels welchem die zunächst in streng axialer Richtung strömende und von dem Blechpaket 28 kommende Luft von ihrer zunächst streng axialen Strömungsrichtung in eine insbesondere streng radiale Strömungsrichtung hin zu den Lüfterradschaufeln 30 umlenkbar ist beziehungsweise umgelenkt wird. Dies bedeutet, dass die von dem Blechpaket 28 kommende Luft zunächst in die axiale Strömungsrichtung strömt beziehungsweise eine axiale Strömungsrichtung aufweist, entlang welcher die Luft in den Zwischenraum 52 strömt. Mittels des Wandungsbereichs 62 wird die Luft umgelenkt, sodass dann die Luft nicht mehr die axiale Strömungsrichtung sondern eine radiale Strömungsrichtung aufweist, entlang welcher beziehungsweise in die die Luft strömt und somit zu den Lüfterradschaufeln 30 strömt. Der Wandungsbereich 62 ist dabei beispielsweise durch die Wandung 58 gebildet oder Teil der Wandung 58.

Von den Kanälen ist in den Fig. 1 und 2 jeweils ein mit 64 bezeichneter Kanal erkennbar, wobei in Fig. 9 mehrere der Kanäle erkennbar und mit 64 bezeichnet sind. Besonders gut aus Fig. 2 ist erkennbar, dass die Kanäle 64 in die durch den Pfeil 56 veranschaulichte Richtung durch die Deckscheibe 50 verschlossen und dadurch in streng axialer Richtung für die Luft dicht sind, sodass die Luft nicht in streng axialer Richtung durch die Kanäle 64 strömen kann, sondern die Luft kann lediglich beispielsweise in streng radialer Richtung durch die Kanäle 64 strömen beziehungsweise entlang des Lüfterrads 26 strömen. Außerdem sind die Kanäle 64 in axialer Richtung zu der Stirnseite 44 hin und somit in eine in Fig. 2 durch einen Pfeil 67 veranschaulichte, mit der axialen Richtung zusammenfallende und der durch den Pfeil 56 veranschaulichten Richtung entgegengesetzte zweite Richtung offen.

Der jeweilige Kanal 64 weist einen von der Luft durchströmbaren Einzelströmungsquerschnitt A auf, welcher beispielsweise in axialer Richtung einerseits durch die Deckscheibe 50 und andererseits durch die Stirnseite 44 begrenzt ist. In Umfangsrichtung ist der Einzelströmungsquerschnitt A beispielsweise durch jeweilige, in Umfangsrichtung unmittelbar zueinander benachbarte der jeweiligen Lüfterradschaufeln 30 begrenzt. Die Einzelströmungsquerschnitte A der Kanäle 64 ergeben in Summe einen Summenströmungsquerschnitt.

Wie in Fig. 1 anhand der dort gezeigten Pfeile erkennbar ist, ist das Blechpaket von der mittels des Lüfterrads 26 geförderten Luft durchströmbar. Dabei weist das gesamte Blechpaket 28 insgesamt einen von der mittels des Lüfterrads 26 geförderten Luft durchströmbaren Blechpaketströmungsquerschnitt auf, welcher erfindungsgemäß dem Summenströmungsquerschnitt entspricht. Der Blechpaketströmungsquerschnitt ist beispielsweise durch jeweilige Luftkanäle 66 gebildet, die in dem Blechpaket 28 verlaufen und sich vorzugsweise in streng axialer Richtung erstrecken. Der jeweilige Luftkanal 66 mündet auf Seiten des Lüfterrads 26 unmittelbar beziehungsweise direkt in den Zwischenraum 52. Hierzu weist der jeweilige Luftkanal 66 wenigstens oder genau eine Austrittsöffnung 68 auf, über welche der jeweilige Luftkanal 66 in den Zwischenraum 52 mündet. Dabei schließen sich jeweilige Wandungsbereiche des Lüfterrads 26 insbesondere in radialer Richtung nach innen hin, in radialer Richtung nach außen hin und in Umfangsrichtung unmittelbar beziehungsweise direkt an die Austrittsöffnung 68, insbesondere an deren Randbereich, an, sodass eine gezielte und definierte Führung der Luft gewährleistet werden kann.

Ferner ist vorzugsweise die Deckscheibe 50 entlang ihrer gesamten, von der Rotorwelle 24 in radialer Richtung nach außen verlaufenden Erstreckung und entlang ihrer gesamten, in Umfangsrichtung des Lüfterrads 26 verlaufenden Erstreckung für die Luft dicht. Weiterhin vorteilhaft hat es sich gezeigt, wenn die Anzahl der Lüfterradschaufeln 30 ungerade ist. Alternativ oder zusätzlich sind die Lüfterradschaufeln 30 in einer ungleichmäßigen Winkelteilung angeordnet, welche wenigstens oder genau drei voneinander unterschiedliche Winkel aufweisen kann. Des Weiteren ist es vorzugsweise vorgesehen, dass das Lüfterrad 26 durch einen Rändelpressverband 70 zumindest drehfest mit der Rotorwelle 24 verbunden ist.

Die jeweilige Eintrittsöffnung weist einen jeweiligen, auch als Einlassquerschnitt bezeichneten Eintrittsquerschnitt auf, welcher von der Luft, die mittels des Lüfterrads 26 in radialer Richtung in das Gehäuse 12 eingesaugt wird, durchströmbar ist. Die Eintrittsquerschnitte ergeben in Summe einen Summeneintrittsquerschnitt. Vorzugsweise entspricht der Summeneintrittsquerschnitt dem Blechpaketströmungsquerschnitt. Der jeweilige Luftkanal 66 weist beispielsweise einen Einzelströmungsquerschnitt S auf, welcher von der Luft, die durch den jeweiligen Luftkanal 66 strömt, durchströmbar ist. Der Blechpaketströmungsquerschnitt ist beispielsweise die Summe der Einzelströmungsquerschnitte S.

Des Weiteren weist vorzugsweise die jeweilige Austrittsöffnung einen jeweiligen, auch als Auslassquerschnitt bezeichneten Austrittsquerschnitt auf, welcher von der Luft durchströmt wird beziehungsweise durchströmbar ist, die mittels des Lüfterrads 26 aus dem Gehäuse 12 ausgeblasen wird. Die Austrittsquerschnitte ergeben in Summe vorzugsweise einen Summenaustrittsquerschnitt, welcher vorzugsweise dem Blechpaketströmungsquerschnitt entspricht.

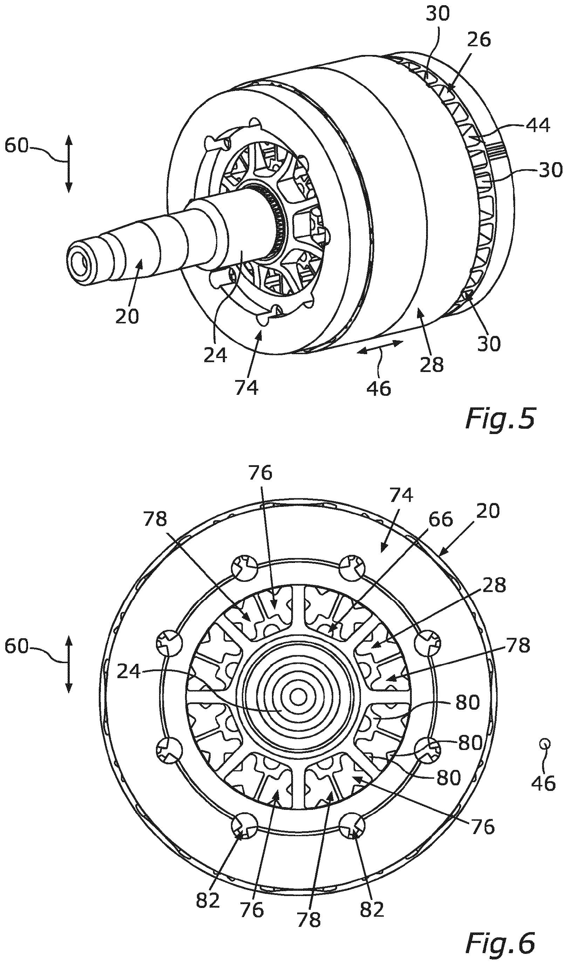

Während Fig. 1 und 2 die erste Ausführungsform zeigen, veranschaulichen Fig. 3 bis 9 einen zweite Ausführungsform der elektrische Maschine 10. Besonders gut aus Fig. 1, 3 und 4 ist erkennbar, dass auf der Rotorwelle 24 eine beispielsweise als Riemenscheibe ausgebildete Scheibe 72 angeordnet ist. Die Scheibe 72 ist beispielsweise drehfest mit der Rotorwelle 24 verbunden und im vollständig hergestellten Zustand des Kraftfahrzeugs von einem beispielsweise als Riemen ausgebildeten Zugmittel umschlungen. Dadurch können beispielsweise Drehmomente zwischen der Rotorwelle 24 und dem Zugmittel über die Scheibe 72 übertragen werden.

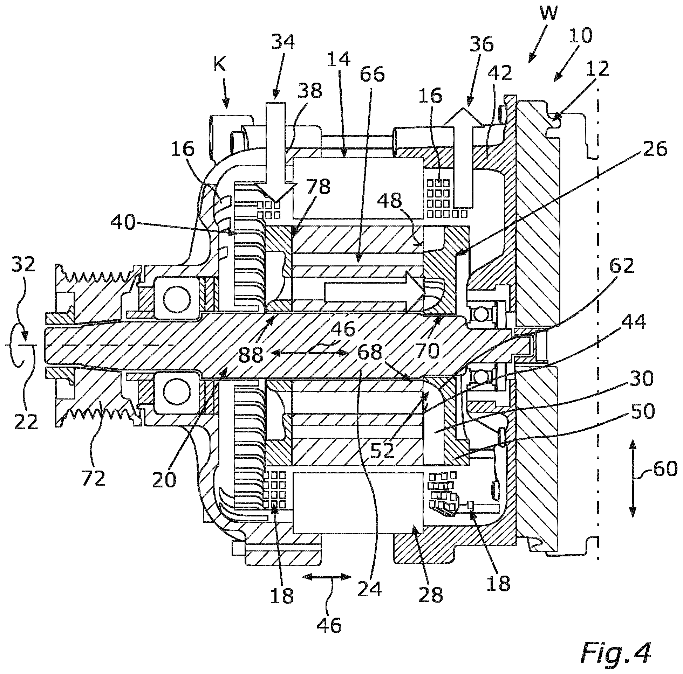

In Fig. 4 veranschaulichen Pfeile die Strömung der Luft durch die elektrische Maschine 10, sodass anhand der Pfeile besonders gut die Luftströmung durch die elektrische Maschine 10 und insbesondere durch die auch als Rotorblechpaket-Öffnungen bezeichneten Luftkanäle 66 des Blechpakets 28 erkennbar ist. außerdem sind in Fig. 4 besonders gut die Wickelköpfe 18 der Wicklung 16 erkennbar. Aus Fig. 4 bis 6 ist darüber hinaus besonders gut erkennbar, dass der Rotor 20 ein auch als Wuchtscheibe bezeichnetes Wuchtrad 74 aufweist, mittels welchem der Rotor 20 gewuchtet beziehungsweise ausgewuchtet ist. Dadurch kann ein besonders ruhiger und somit vibrationsarmer Lauf des Rotors 20 gewährleistet werden. Die Wuchtscheibe weist dabei mehrere, in axialer Richtung von der mittels des Lüfterrads 26 geförderten Luft durchströmbare Durchströmöffnungen 76 auf, sodass die Luft besonders gut durch die Wuchtscheibe hindurch und in der Folge in die Luftkanäle 66 einströmen und diese durchströmen kann. Die Wuchtscheibe ist dabei in dem zuvor genannten Luftpfad stromab des Eintritts 34, insbesondere stromab des einen Wickelkopfes 18 und stromauf des Blechpakets 28 angeordnet.

Eine übermäßige Verschattung und somit Versperrung der auch als Luftöffnungen bezeichneten Luftkanäle 66 im Blechpaket 28 kann dadurch vermieden werden, dass die Durchströmöffnungen 76 deckungsgleich mit den Luftkanälen 66, insbesondere mit deren Eintrittsöffnungen 78, angeordnet sind. Über die EintrittsÖffnungen 78 kann die mittels des Lüfterrads 26 geförderte Luft in die Luftkanäle 66 einströmen, insbesondere in axialer Richtung. Dies bedeutet, dass vorzugsweise die Durchströmöffnungen 76 beziehungsweise in Überlappung mit den Luftkanälen 66 beziehungsweise mit den Eintrittsöffnungen 78 angeordnet sind. Die Wuchtscheibe weist darüber hinaus äußere, beispielsweise als Durchgangsöffnungen Öffnungen 82 auf, welche in radialer Richtung weiter außen als die Durchströmöffnungen 76 angeordnet sind. Um beispielsweise sicherzustellen, dass die Durchströmöffnungen 76 in Überdeckung beziehungsweise in Überlappung mit den Eintrittsöffnungen 78 angeordnet sind beziehungsweise werden, wird beispielsweise das Wuchtrad 74 mittels wenigstens einer oder vorzugsweise mittels wenigstens zweier der äußeren Öffnungen 82 relativ zu dem Blechpaket 28 und/oder relativ zu dem Gehäuse 12 positioniert.

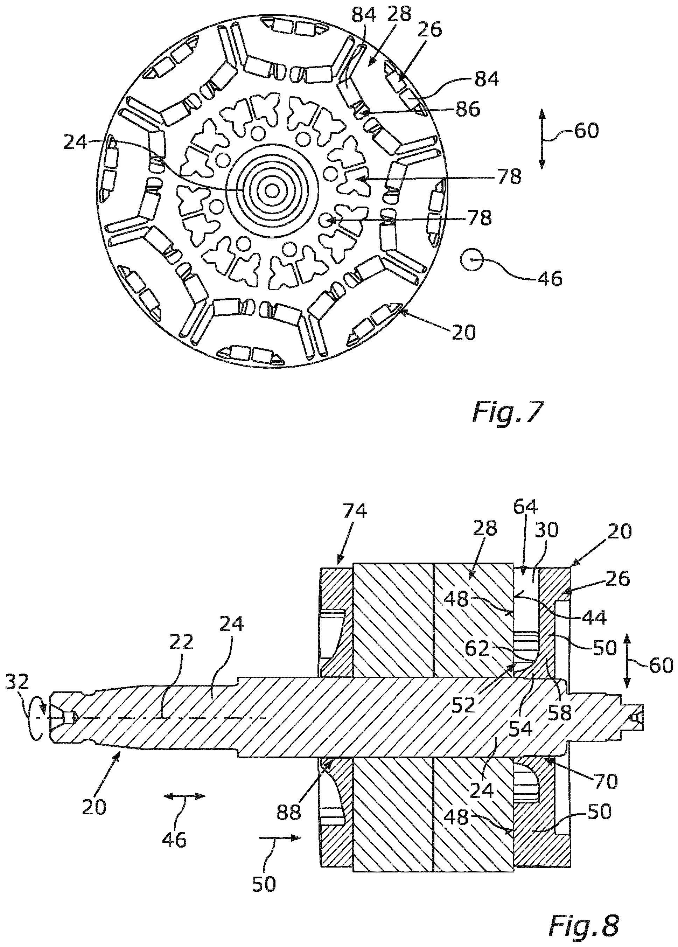

Außerdem weist das Blechpaket 28 Ausbuchtungen 80 auf, welche beispielsweise in einem Rotor-Blechschnitt des Blechpakets 28 ausgebildet sind. Die Ausbuchtungen 80 stehen beispielsweise in axialer Richtung, insbesondere zu der Wuchtscheibe hin, von einem Grundkörper des Blechpakets 28 ab. Die Ausbuchtungen 80 erzeugen Strömungsturbulenzen der Luftströmung, um eine besonders vorteilhaften Wärmeaustausch zwischen der Luft und dem Blechpaket 28 gewährleisten zu können. Bei der zweiten Ausführungsform sind acht Öffnungen 82 vorgesehen, welche als Positionierlöcher verwendet werden, um die Wuchtscheibe derart relativ zu dem Blechpaket 28, insbesondere in Umfangsrichtung des Rotors 20, anzuordnen, dass die Durchströmöffnungen 76 in Überlappung mit den Eintrittsöffnungen 78 angeordnet sind. Besonders gut aus Fig. 7 ist erkennbar, dass die Eintrittsöffnungen 78 Öffnungen für einen Luftdurchzug sind, sodass die mittels des Lüfterrads 26 geförderte Luft durch das Blechpaket 28 hindurchströmen kann.

Außerdem umfasst der Rotor 20 aus Fig. 7 erkennbare Magnete 84, welche als Permanentmagnete ausgebildet sein können. Die Magnete 84 sind an dem Blechpaket 28 gehalten und dabei zumindest teilweise in jeweiligen, korrespondierenden und auch als Taschen bezeichneten Magnettaschen 86 des Blechpakets 28 angeordnet beziehungsweise aufgenommen.

Fig. 8 zeigt den Rotor 20 gemäß der zweiten Ausführungsform in einer schematischen und geschnittenen Seitenansicht. Besonders gut aus Fig. 8 erkennbar sind das Lüfterrad 26, das Blechpaket 28, die Rotorwelle 24 und das Wuchtrad 74. Außerdem ist aus Fig. 8 besonders gut der Rändelpressverband 70 erkennbar, mittels welchem das Lüfterrad 26 drehfest mit der Rotorwelle 24 verbunden und auch in axialer Richtung des Rotors 20 an der Rotorwelle 24 festgelegt ist. Darüber hinaus ist ein weiterer Rändelpressverband 88 vorgesehen, mittels welchem die Wuchtscheibe drehfest mit der Rotorwelle 24 verbunden und auch in axialer Richtung des Rotors 20 an der Rotorwelle 24 festgelegt ist. Des Weiteren ist aus Fig. 8 besonders gut erkennbar, dass die Deckscheibe 50 ein Teil des Lüfterrads 26 ist und genutzt wird, um stirnseitige Totgebiete zu vermeiden. Der Rändelpressverband 70 beziehungsweise 88 wird zur Reduktion von Fertigungstoleranzen und für einen verbesserten Kontakt zwischen der Welle und dem Lüfterrad 26 beziehungsweise zwischen der Welle und dem Wuchtrad 74 genutzt, insbesondere durch einen Reib- und Formschluss. Außerdem wird der Rändelpressverband 70 beziehungsweise 88 zur Kompensation eines verminderten Pressverbands bei hohen Temperaturen genutzt.

Schließlich sind aus Fig. 9 besonders gut die Lüfterradschaufeln 30 erkennbar. Die ungerade Anzahl der Lüfterradschaufeln 30 und ihre ungleichmäßige Winkelteilung dienen der Geräuschreduktion.

Ferner ist es vorzugsweise vorgesehen, dass ein gesamter Einlassquerschnitt des Lüfterrads 26, über dessen gesamten Einlassquerschnitt die mittels des Lüfterrads 26 geförderte Luft insgesamt in das Lüfterrad 26, insbesondere in die Kanäle 64, einleitbar ist, dem Blechpaketströmungsquerschnitt entspricht. Außerdem bildet der Wandungsbereich 62 eine verrundete Fläche, mittels welcher eine besonders vorteilhafte und strömungsgünstige Führung der von dem Blechpaket 28 kommenden und zunächst in axialer Richtung strömenden Luft hin zu den Lüfterradschaufeln 30 realisiert werden kann. Hierdurch können Totgebiete vermieden werden. Außerdem sind in Fig. 9 die zuvor genannten, in Fig. 9 mit 90 bezeichneten und sich in radialer Richtung nach außen beziehungsweise nach innen hin unmittelbar beziehungsweise direkt an die jeweilige Austrittsöffnung 68, insbesondere an deren Rand, anschließenden Wandungsbereiche des Lüfterrads 26 erkennbar.

## Patentansprüche

1. Rotor (20) für eine elektrische Maschine (10), mit wenigstens einer um eine Drehachse (22) drehbaren Rotorwelle (24), mit wenigstens einem drehfest mit der Rotorwelle (24) verbundenen Blechpaket (28), und mit wenigstens einem drehfest mit der Rotorwelle (24) verbundenen und mehrere Lüfterradschaufeln (30) aufweisenden Lüfterrad (26), mittels welchem Luft zum Kühlen des Rotors (20) zu fördern ist, wobei
die Lüfterradschaufeln (30) an einer den Lüfterradschaufeln (30) in axialer Richtung (46) des Rotors (20) zugewandten Stirnseite (44) des Blechpakets (28) direkt anliegen, wobei das Lüfterrad (26) in axialer Richtung (46) für die Luft dicht ist,
das Lüfterrad (26) eine sich in axialer Richtung (46) an die Lüfterradschaufeln (30) anschließende und in axialer Richtung (46) für die Luft dichte Deckscheibe (50) aufweist, welche zumindest in einem in radialer Richtung (60) des Rotors (20) innenseitig der Lüfterradschaufeln (30) angeordneten Bereich (B) in axialer Richtung (46) von der Stirnseite (44) des Blechpakets (28) beabstandet ist, wodurch in dem Bereich (B) ein in axialer Richtung (46) zumindest durch die Deckscheibe (50) begrenzter Zwischenraum (52) gebildet ist, in welchen die Luft in axialer Richtung (46) einleitbar ist, wobei die Luft mittels der Deckscheibe (50) von dem Zwischenraum (52) in radialer Richtung (60) nach außen zu den Lüfterradschaufeln (30) zu führen ist,
die in Umfangsrichtung (32) des Lüfterrads (26) voneinander beabstandeten Lüfterradschaufeln (30) jeweilige, in Umfangsrichtung (32) des Lüfterrads (26) zwischen den jeweiligen Lüfterradschaufeln (30) angeordnete und von der Luft durchströmbare Kanäle (64) begrenzen,
die Kanäle (64) mittels der Deckscheibe (50) in eine mit der axialen Richtung (46) des Rotors (20) zusammenfallende und von der Stirnseite (44) wegweisende Richtung (56) verschlossen und dadurch für die Luft in axialer Richtung (46) dicht sind,
der jeweilige Kanal (64) einen von der Luft durchströmbaren Einzelströmungsquerschnitt (A) aufweist, wobei die Einzelströmungsquerschnitte (A) der Kanäle (64) in Summe einen von der Luft durchströmbaren Summenströmungsquerschnitt bilden,
das Blechpaket (28) von der mittels des Lüfterrads (26) geförderten Luft durchströmbar ist, **dadurch gekennzeichnet, dass**
das gesamte Blechpaket (28) insgesamt einen von der mittels des Lüfterrads (26) geförderten Luft durchströmbaren Blechpaketströmungsquerschnitt aufweist, welcher dem Summenströmungsquerschnitt entspricht.

2. Rotor (20) nach Anspruch 1,
**dadurch gekennzeichnet, dass**
die Deckscheibe (50) wenigstens einen den Zwischenraum (52) zumindest teilweise in axialer Richtung (46) begrenzenden und bogenförmigen Wandungsbereich (62) aufweist, mittels welchem die Luft von einer axialen Strömungsrichtung (56) in eine radiale Strömungsrichtung (60) hin zu den Lüfterradschaufeln (30) umlenkbar ist.

3. Rotor (20) nach einem der vorstehenden Ansprüche,
**dadurch gekennzeichnet, dass**
die Kanäle (64) in axialer Richtung (46) zu der Stirnseite (44) des Blechpakets (28) hin offen sind.

4. Rotor (20) nach einem der vorhergehenden Ansprüche,
**dadurch gekennzeichnet, dass**
die Deckscheibe (50) entlang ihrer gesamten, von der Rotorwelle (24) in radialer Richtung (60) nach außen verlaufenden Erstreckung und entlang ihrer gesamten, in Umfangsrichtung (32) des Lüfterrads (26) verlaufenden Erstreckung für die Luft dicht ist.

5. Rotor (20) nach einem der vorhergehenden Ansprüche,
**dadurch gekennzeichnet, dass**
die Anzahl der Lüfterradschaufeln (30) ungerade ist.

6. Rotor (20) nach einem der vorhergehenden Ansprüche,
**dadurch gekennzeichnet, dass**
die Lüfterradschaufeln (30) in einer ungleichmäßigen Winkelteilung angeordnet sind.

7. Rotor (20) nach Anspruch 6,
**dadurch gekennzeichnet, dass**
die Winkelteilung wenigstens oder genau drei voneinander unterschiedliche Winkel aufweist.

8. Rotor (20) nach einem der vorhergehenden Ansprüche,
**dadurch gekennzeichnet, dass**
das Lüfterrad (26) durch einen Rändelpressverband (70) zumindest drehfest mit der Rotorwelle (24) verbunden ist.

9. Elektrische Maschine (10), mit wenigstens einem Stator (14), und mit wenigstens einem um eine Drehachse (22) relativ zu dem Stator (14) drehbaren Rotor (20) nach Anspruch 1.

## Claims

1. Rotor (20) for an electric machine (10), with at least one rotor shaft (24) which can be rotated about a rotational axis (22), with at least one laminated core (28) which is connected fixedly to the rotor shaft (24) for conjoint rotation, and with at least one fan impeller (26) which is connected fixedly to the rotor shaft (24) for conjoint rotation, has a plurality of fan impeller blades (30), and by means of which air for cooling the rotor (20) is to be conveyed,
the fan impeller blades (30) bearing directly against an end side (44) of the laminated core (28), which end side (44) faces the fan impeller blades (30) in the axial direction (46) of the rotor (20), the fan impeller (26) being tight for the air in the axial direction (46),
the fan impeller (26) having a cover disc (50) which adjoins the fan impeller blades (30) in the axial direction (46), is tight for the air in the axial direction (46), and is spaced apart in the axial direction (46) from the end side (44) of the laminated core (28) at least in a region (B) which is arranged on the inner side of the fan impeller blades (30) in the radial direction (60) of the rotor (20), as a result of which an intermediate space (52) which is delimited in the axial direction (46) at least by way of the cover disc (50) is formed in the region (B), into which intermediate space (52) the air can be introduced in the axial direction (46), it being possible for the air to be guided by means of the cover disc (50) from the intermediate space (52) in the radial direction (60) outwards to the fan impeller blades (30),
the fan impeller blades (30) which are spaced apart from one another in the circumferential direction (32) of the fan impeller (26) delimiting respective channels (64) which are arranged between the respective fan impeller blades (30) in the circumferential direction (32) of the fan impeller (26) and can be flowed through by the air,
the channels (64) being closed by means of the cover disc (50) in a direction (56) which coincides with the axial direction (46) of the rotor (20) and points away from the end side (44), and being tight for the air in the axial direction (46) as a result,
the respective channel (64) having an individual flow cross section (A) which can be flowed through by the air, the individual flow cross sections (A) of the channels (64) in total forming a total flow cross section which can be flowed through by the air,
it being possible for the laminated core (28) to be flowed through by the air which is conveyed by means of the fan impeller (26), **characterized in that**
the entire laminated core (28) overall has a laminated core flow cross section which can be flowed through by the air conveyed by means of the impeller wheel (26) and corresponds to the total flow cross section.

2. Rotor (20) according to Claim 1,
**characterized in that**
the cover disc (50) has at least one arcuate wall region (62) which delimits the intermediate space (52) at least partially in the axial direction (46) and by means of which the air can be deflected from an axial flow direction (56) into a radial flow direction (60) towards the fan impeller blades (30).

3. Rotor (20) according to either of the preceding claims,
**characterized in that**
the channels (64) are open in the axial direction (46) towards the end side (44) of the laminated core (28).

4. Rotor (20) according to one of the preceding claims, **characterized in that**
the cover disc (50) is tight for the air along its entire extent which runs outwards from the rotor shaft (24) in the radial direction (60) and along its entire extent which runs in the circumferential direction (32) of the fan impeller (26).

5. Rotor (20) according to one of the preceding claims, **characterized in that**
the number of fan impeller blades (30) is odd.

6. Rotor (20) according to one of the preceding claims, **characterized in that**
the fan impeller blades (30) are arranged in an inhomogeneous angular pitch.

7. Rotor (20) according to Claim 6,
**characterized in that**
the angular pitch has at least or exactly three angles which differ from one another.

8. Rotor (20) according to one of the preceding claims, **characterized in that**
the fan impeller (26) is connected to the rotor shaft (24) at least fixedly for conjoint rotation by way of a knurling interference fit (70).

9. Electric machine (10), with at least one stator (14), and with at least one rotor (20) according to Claim 1 which can be rotated about a rotational axis (22) relative to the stator (14).

## Revendications

1. Rotor (20) pour une machine électrique (10), comprenant au moins un arbre de rotor (24) apte à tourner autour d'un axe de rotation (22), avec au moins un noyau feuilleté (28) relié de manière solidaire en rotation à l'arbre de rotor (24), et avec au moins une roue de ventilation (26) reliée de manière solidaire en rotation à l'arbre de rotor (24) et présentant plusieurs aubes (30) de roue de ventilateur, au moyen desquelles de l'air doit être transporté pour refroidir le rotor (20), dans lequel
les aubes (30) de la roue de ventilation s'appliquent directement contre une face frontale (44) du noyau feuilleté (28) tournée vers les aubes (30) de la roue de ventilation dans la direction axiale (46) du rotor (20), la roue de ventilation (26) étant étanche à l'air dans la direction axiale (46),
la roue de ventilation (26) présente un disque de recouvrement (50) se raccordant dans la direction axiale (46) aux aubes (30) de la roue de ventilation et étanche à l'air dans la direction axiale (46), lequel disque de recouvrement est espacé dans la direction axiale (46) de la face frontale (44) du noyau feuilleté (28) au moins dans une zone (B) disposée dans la direction radiale (60) du rotor (20) du côté intérieur des aubes (30) de la roue de ventilation, ce qui forme dans la zone (B) un espace intermédiaire (52) limité dans la direction axiale (46) au moins par le disque de recouvrement (50), dans lequel de l'air est apte à être introduit dans la direction axiale (46), l'air devant être guidé au moyen du disque de recouvrement (50) de l'espace intermédiaire (52) dans la direction radiale (60) vers l'extérieur vers les aubes (30) de roue de ventilateur,
les aubes (30) de roue de ventilateur, espacées les unes des autres dans la direction circonférentielle (32) de la roue de ventilation (26) délimitent des canaux (64) respectifs agencés dans la direction circonférentielle (32) de la roue de ventilation (26), entre les aubes (30) de roue de ventilateur respectives, et aptes à être traversés par de l'air,
les canaux (64) sont fermés au moyen du disque de recouvrement (50) dans une direction (56) coïncidant avec la direction axiale (46) du rotor (20) et s'éloignant de la face frontale (44) et sont ainsi étanches à l'air dans la direction axiale (46),
le canal respectif (64) présente une section transversale d'écoulement individuel (A) apte à être traversée par l'air, les sections transversales d'écoulement individuelles (A) des canaux (64) formant au total une section transversale d'écoulement cumulé apte à être traversée par l'air,
le noyau feuilleté (28) étant apte à être traversé par l'air transporté au moyen de la roue de ventilation (26), **caractérisé en ce que** le noyau feuilleté (28) présente dans son ensemble une section transversale d'écoulement de noyau feuilleté apte à être traversée par l'air transporté au moyen de la roue de ventilation (26), qui correspond à la section transversale d'écoulement cumulé.

2. Rotor (20) selon la revendication 1,
**caractérisé en ce que** le disque de recouvrement (50) présente au moins une zone de paroi arquée (62) délimitant l'espace intermédiaire (52) au moins partiellement dans la direction axiale (46), au moyen de laquelle de l'air est apte à être dévié depuis une direction d'écoulement axiale (56) jusqu'à une direction d'écoulement radiale (60) vers les aubes (30) de roue de ventilateur.

3. Rotor (20) selon l'une des revendications précédentes,
**caractérisé en ce que** les canaux (64) sont ouverts dans la direction axiale (46) vers la face frontale (44) du noyau feuilleté (28).

4. Rotor (20) selon l'une des revendications précédentes,
**caractérisé en ce que** le disque de recouvrement (50) est étanche à l'air sur toute son étendue s'étendant radialement (60) vers l'extérieur depuis l'arbre de rotor (24) et sur toute son étendue s'étendant dans la direction circonférentielle (32) de la roue de ventilation (26).

5. Rotor (20) selon l'une quelconque des revendications précédentes, **caractérisé en ce que** le nombre d'aubes (30) de la roue de ventilation est impair.

6. Rotor (20) selon l'une des revendications précédentes,
**caractérisé en ce que** les aubes (30) de ventilateur sont agencées selon un pas angulaire irrégulier.

7. Rotor (20) selon la revendication 6,
**caractérisé en ce que** le pas angulaire présente au moins ou exactement trois angles différents les uns des autres.

8. Rotor (20) selon l'une des revendications précédentes,
**caractérisé en ce que** la roue de ventilation (26) est reliée au moins solidairement en rotation à l'arbre de rotor (24) au moyen d'un ajustement serré moleté (70).

9. Machine électrique (10), comprenant au moins un stator (14), et avec au moins un rotor (20) apte à tourner autour d'un axe de rotation (22) par rapport au stator (14) selon la revendication 1.
